Europäisches Patentamt

European Patent Office

Office européen des brevets

(11) Numéro de publication: **0 412 900 A1**

# (12) DEMANDE DE BREVET EUROPEEN

(21) Numéro de dépôt: 90402256.3

(22) Date de dépôt: 07.08.90

(51) Int. Cl.5: **G01V 3/02**

(30) Priorité: 09.08.89 FR 8910739

(43) Date de publication de la demande:
13.02.91 Bulletin 91/07

(84) Etats contractants désignés:
**BE DE DK ES GB GR IT NL SE**

(71) Demandeur: **ETAT FRANCAIS REPRESENTE PAR LE LABORATOIRE CENTRAL DES PONTS ET CHAUSSEES**
**58 Boulevard Lefevre**
**F-75732 Paris Cédex 15(FR)**

(72) Inventeur: **Lafont, René J.**
**1 rue du Général de Gaulle**
**F-44340 Bouguenais(FR)**
Inventeur: **Lagabrielle, Richard J.**
**4 rue de l'Ilette**
**F-44680 Sainte Pazane(FR)**
Inventeur: **Côte, Philippe A.**
**1 Impasse de la Grillonnerie**
**F-44830 Brains(FR)**
Inventeur: **Pelissier, Michel**
**26 bis rue du Planty**
**F-44340 Bouguenais(FR)**

(74) Mandataire: **Levesque, Denys et al**
**Cabinet Beau de Loménie 55, rue d'Amsterdam**
**F-75008 Paris(FR)**

(54) Procédé et dispositif de reconnaissance d'un sol par prospection électrique en site aquatique.

(57) L'invention concerne la reconnaissance par sondage électrique d'un sol (20) recouvert d'une masse d'eau (10). On réalise des mesures de résistivité apparente du milieu à l'aide d'un système de paires d'électrodes alignées (AB, $M_1N_1$, $M_2N_2$,...) d'écartements différents que l'on dispose sur le sol au fond de l'eau, par injection d'un courant électrique (I) déterminé dans la paire d'électrodes centrale (AB), lequel fait apparaître une différence de potentiel (V) dans l'une des autres paires d'électrodes ($M_2N_2$) que l'on mesure et d'où l'on déduit une valeur de résistivité apparente du milieu soumis au sondage électrique. Entre le système d'électrodes et la masse d'eau est interposée une feuille électriquement isolante continue (40), dimensionnée de façon à recouvrir largement la totalité du système d'électrodes. Cette feuille constitue une barrière empêchant le courant injecté de circuler dans l'eau.

Fig-2a

# PROCÉDÉ ET DISPOSITIF DE RECONNAISSANCE D'UN SOL PAR PROSPECTION ÉLECTRIQUE EN SITE AQUATIQUE.

L'invention a tout d'abord pour objet un procédé de reconnaissance par prospection électrique d'un sol recouvert d'une masse d'eau, selon lequel on réalise des mesures de résistivité apparente du milieu à l'aide d'un système d'électrodes que l'on dispose sur le sol au fond de l'eau, par injection d'un courant électrique déterminé dans l'une au moins des électrodes, lequel fait apparaître un potentiel dans au moins une autre électrode que l'on mesure et d'où l'on déduit une valeur de résistivité apparente du milieu soumis à la prospection électrique.

La connaissance de la nature, des propriétés physiques et de la structure des matériaux qui forment le fond de la mer, d'un lac ou d'un cours d'eau peut être utile pour un grand nombre d'applications telles que le calcul de fondations d'ouvrages, l'exploitation des matériaux (sables, graviers, etc), la prospection minière, ou la mise en place de câbles ou de canalisations (pour transport d'électricité, d'hydrocarbures, etc).

Beaucoup de méthodes ont été imaginées et sont appliquées pour obtenir les informations nécessaires; en voici des exemples :
- les forages, qui, s'ils sont indispensables pour le prélèvement d'échantillons, ne donnent que des informations ponctuelles et sont coûteux dès que la profondeur de l'eau est importante;
- les méthodes de la géophysique appliquée :
- la sismique réflexion, qui est très efficace pour les profondeurs d'eau supérieures à 20 m, mais dont la résolution est souvent insuffisante en ce qui concerne les premières couches de sédiments meubles;
. la sismique réfraction, efficace à toutes les profondeurs, à condition d'utiliser des géophones posés sur le fond; mais sa mise en oeuvre est lourde, et l'interprétation des mesures délicate, voire presque impossible s'il existe des couches dans lesquelles la célérité des ondes mécaniques est inférieure à sa valeur dans l'eau, par exemple des vases.
- les méthodes de prospection électrique par courant injecté.

Ces dernières méthodes, auxquelles se rattache le procédé selon la présente invention, consistent, comme on l'a rappelé au début, à mesurer en un point de la surface du sol le potentiel V créé par un courant I injecté en un autre point, et à calculer une valeur de résistivité apparente $\rho_a$ du sol : $\rho_a = k \, V / I$, k étant un facteur géométrique. Des valeurs de résistivité apparente $\rho_a$ obtenues lors d'une série de mesures avec divers points d'injection et de mesure, on peut déduire d'utiles renseignements sur la nature et la structure du sol.

Les méthodes de prospection électrique ont fait leur preuve pour l'exploration de terrains secs. En site aquatique, elles sont d'autant plus efficaces qu'il y a peu d'eau, les performances étant meilleures lorsque les électrodes sont au fond de l'eau plutôt qu'en surface. En présence d'eau sous une grande épaisseur, les résultats sont faussés par la faible résistivité de l'eau qui masque celle du sol submergé. Lorsque l'eau est douce, une interprétation assez détaillée des résultats est possible, avec une résolution faible, pour les premières couches du sol dont l'épaisseur cumulée est inférieure à la profondeur de l'eau. En eau salée, on obtient aisément la conductance longitudinale de la couche de sédiments meubles si l'on utilise des dispositifs beaucoup plus longs que l'épaisseur cumulée de la couche d'eau et de celle des sédiments meubles. Quelques forages judicieusement placés permettent d'en obtenir l'épaisseur partout, mais d'éventuelles variations verticales dans la structure de cette couche ne sont pas facilement mises en évidence.

La présente invention a pour but de remédier à ces inconvénients et d'améliorer la qualité des résultats obtenus en site aquatique par la technique de la prospection électrique.

A cet effet, le procédé selon l'invention consiste essentiellement à interposer, lors des mesures à l'aide du système d'électrodes précité, entre celui-ci et la masse d'eau une feuille électriquement isolante continue, dimensionnée de façon à recouvrir largement l'ensemble des électrodes d'injection de courant et de mesure de potentiel.

Cette feuille isolante a pour effet d'empêcher qu'une grande partie du courant injecté circule dans la couche d'eau. Les lignes de courant sont donc amenées à se refermer presque entièrement dans le sol à reconnaître, et non plus dans l'eau, de sorte que les lignes de courant et les équipotentielles prennent une forme qui se rapproche de celles qu'elles auraient s'il n'y avait pas d'eau. Ainsi, les résultats de mesure sont préservés de l'influence perturbatrice de l'eau, plus ou moins parfaitement suivant les dimensions de la feuille isolante par rapport à celles du système d'électrodes. A la limite, si la feuille isolante avait des dimensions relativement très grandes, les mesures obtenues seraient exactement les mêmes que celles qu'on obtiendrait s'il n'y avait pas d'eau.

Ainsi, d'une manière générale, l'invention a pour objet l'interposition d'une feuille de matière électriquement isolante entre tout dispositif d'électrodes, destinées à la prospection électrique par courant injecté au fond de l'eau, et la masse d'eau environnante.

Chaque électrode d'injection de courant fait partie d'une paire d'électrodes dont l'autre électrode, qui peut être commune à toutes les paires d'électrodes destinée à l'injection du courant électrique, peut être placée en dehors de la feuille, loin de celle-ci. Il en va de même pour chaque paire d'électrodes destinées à la mesure du potentiel électrique induit : l'une au moins des électrodes est sous la feuille et l'autre peut éventuellement se situer en un point éloigné de la feuille et servir de référence. Cette électrode de référence peut d'ailleurs être commune à toutes les paires d'électrodes destinées à la mesure d'un potentiel.

Plus particulièrement, le système d'électrodes utilisé peut être formé de paires d'électrodes, alignées ou non d'écartements différents, tandis qu'on injecte un courant électrique déterminé dans l'une des paires d'électrodes et on mesure la différence de potentiel qui apparaît sur une autre paire d'électrodes pour en déduire une valeur de la résistivité apparente du milieu. Il convient alors que le système d'électrodes soit recouvert en totalité par la feuille électriquement isolante.

Dans ce dernier cas, afin de remédier à la moindre efficacité de la feuille isolante lorsque la longueur du système d'électrodes se rapproche de sa propre longueur, il convient de corriger les valeurs de résistivité apparente obtenues, ce qui peut être fait de la façon suivante :

a) on dresse au préalable, expérimentalement, un abaque comportant des courbes représentatives de la quantité

$$y = (\rho_s/\rho_a) - 1$$

en fonction de la quantité

$$x = \rho_n/\rho_s,$$

$\rho_n$ étant la résistivité que peut présenter une masse d'eau et $\rho_s$ celle que peut présenter un sol, chaque courbe correspondant à un écartement prédéterminé $d_i$ de la paire d'électrodes de plus grand écartement;

b) sur le terrain, on mesure la résistivité $\rho_n$ de la masse d'eau recouvrant le sol à reconnaître, ainsi que la résistivité apparente du fond par une série de valeurs $d_1$, $d_2$, ... $d_i$, ... de l'écartement de la paire d'électrodes de plus grand écartement, et l'on note les valeurs correspondantes $\rho_{ami}$ de la résistivité apparente mesurée;

c) pour chaque écartement $d_i$, on calcule la quantité

$$x_i = \rho_n/\rho_{aei},$$

$\rho_{aei}$ étant une valeur estimée de la résistivité apparente plus proche de la vraie valeur que la valeur mesurée, on porte sur l'abaque en abscisses la quantité $x_i$ calculée et on relève l'ordonnée $y_i$ du point correspondant à cette abscisse sur le courbe relative à l'écartement choisi $d_i$, puis on calcule la valeur corrigée $\rho_{aci}$ de la résistivité apparente par la formule

$$\rho_{aci} = \rho_{ami} (1 + y_i).$$

Il est commode de choisir, comme valeur estimée $\rho_{aei}$ de la résistivité apparente pour l'écartement $d_i$, une valeur égale à la valeur corrigée de la résistivité apparente $\rho_{ac (i-1)}$ précédemment déterminée pour l'écartement $d_{i-1}$ immédiatement inférieur de la paire d'électrodes de plus grand écartement.

L'invention a également pour objet un dispositif de reconnaissance par prospection électrique d'un sol submergé, comprenant un système d'électrodes alignées composé de deux paires d'électrodes, l'une d'écartement plus grand et variable, encadrant l'autre, et destiné à être appliqué sur le sol à reconnaître, l'une des paires d'électrodes servant à injecter un courant électrique dans le sol et l'autre à mesurer la différence de potentiel résultante qui apparaît entre ses deux points de contact avec le sol.

Selon l'invention, ce dispositif est muni d'une feuille continue de matériau électriquement isolant qui s'étend à plat sur le système d'électrodes entier et le recouvre en débordant largement de toutes parts autour de celui-ci lorsqu'il est appliqué sur la surface du sol submergé à reconnaître. Cette feuille isolante joue le rôle d'une barrière ayant pour effet de forcer le courant injecté à l'interface sol/eau de circuler en quasi-totalité dans le sol. De préférence, on lui donne des dimensions telles qu'elle déborde de deux mètres au moins tout autour du système d'électrodes. C'est ainsi que, pour un système d'électrodes de longueur maximale égale à 26 mètres environ, c'est-à-dire dont l'écartement de la paire d'électrodes d'écartement variable peut atteindre cette valeur, la feuille isolante peut présenter la forme d'un rectangle de 10 m x 30 m environ.

En pratique, les électrodes du dispositif peuvent être montées le long d'un support linéaire auquel est fixée la feuille isolante, ou être fixées directement sur la feuille isolante, qui leur sert alors de support (bien entendu sans transpercement de celle-ci).

L'ensemble du dispositif peut être maintenu fixe à l'emplacement que l'on désire reconnaître, ou déplacé, de manière discrète ou continue, sur le fond; il peut ainsi être utilisé pour réaliser ce qu'il est convenu d'appeler des sondages électriques ou des traînés permettant de dresser des profils de résistivité apparente.

D'autres particularités et avantages de l'invention ressortiront de la description qui va suivre, en regard des dessins annexés, d'un exemple de réalisation non limitatif.

La figure 1 illustre le principe des mesures de sondage électrique.

Les figures 2a et 2b représentent, respectivement en coupe longitudinale et en vue de dessous, un dispositif selon l'invention.

Les figures 3 et 4 sont des diagrammes traduisant les résultats obtenus avant et après correction, respectivement sur deux sites aquatiques différents.

La figure 5 est un abaque permettant d'effectuer la correction des résultats de mesure.

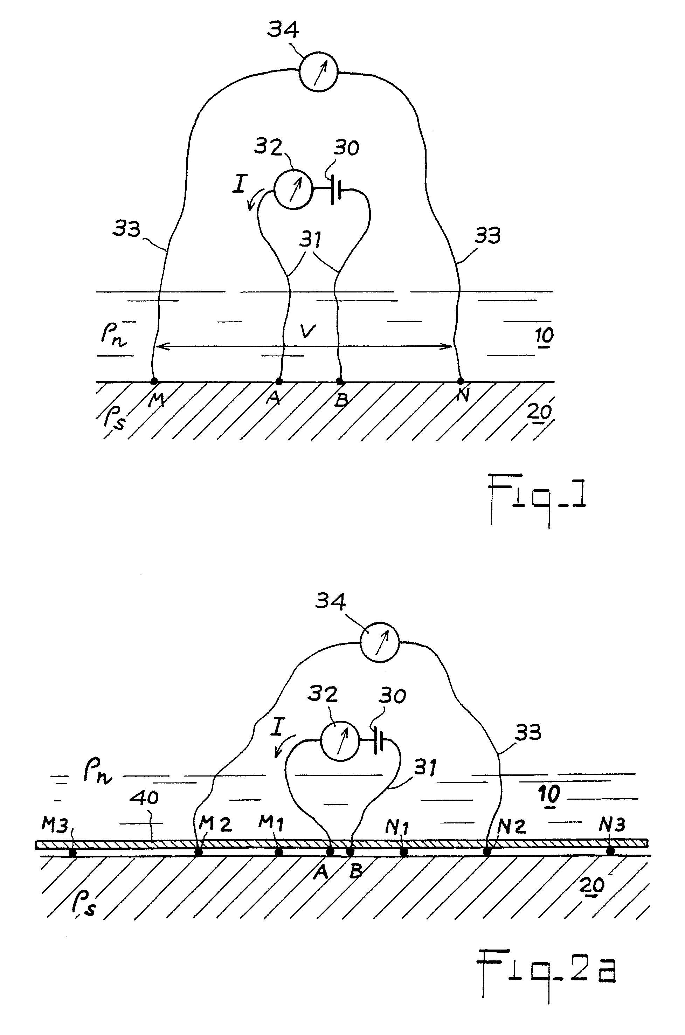

La reconnaissance par prospection électrique d'un sol 20 submergé sous une masse d'eau 10 s'effectue, comme le montre la figure 1, en disposant au fond de l'eau deux paires d'électrodes AB et MN, les électrodes de la seconde paire MN, d'écartement plus grand, encadrant celles de la première paire AB. On injecte dans les électrodes de l'une des paires, ici la paire AB, à l'aide d'une source 30 et de conducteurs isolés 31, un courant électrique alternatif à très basse fréquence (par exemple 0,5 Hz), dont l'intensité I est déterminée à l'aide d'un appareil de mesure 32, et on relève, via des conducteurs isolés 33 et à l'aide d'un autre appareil de mesure 34, la différence de potentiel causée entre les électrodes de l'autre paire, ici la paire MN, par la circulation du courant I dans le sol 20. On déduit de ces mesures la valeur de la "résistivité apparente" $\rho_a$ du sol 20 définie par la formule :

$$\rho_a = k \ V/I.$$

Puis on recommence après avoir modifié l'écartement des électrodes MN de la paire de mesure de tension. Les différentes valeurs de résistivité apparente qui peuvent ainsi être calculées fournissent des informations sur la résistivité $\rho_s$ du sol, sur sa nature et sur sa structure.

Lorsque, comme c'est le cas considéré ici, le sol 20 est recouvert d'une masse d'eau 10, les mesures sont complètement perturbées, la résistivité $\rho_n$ relativement faible de celle-ci masquant la résistivité $\rho_s$ du sol.

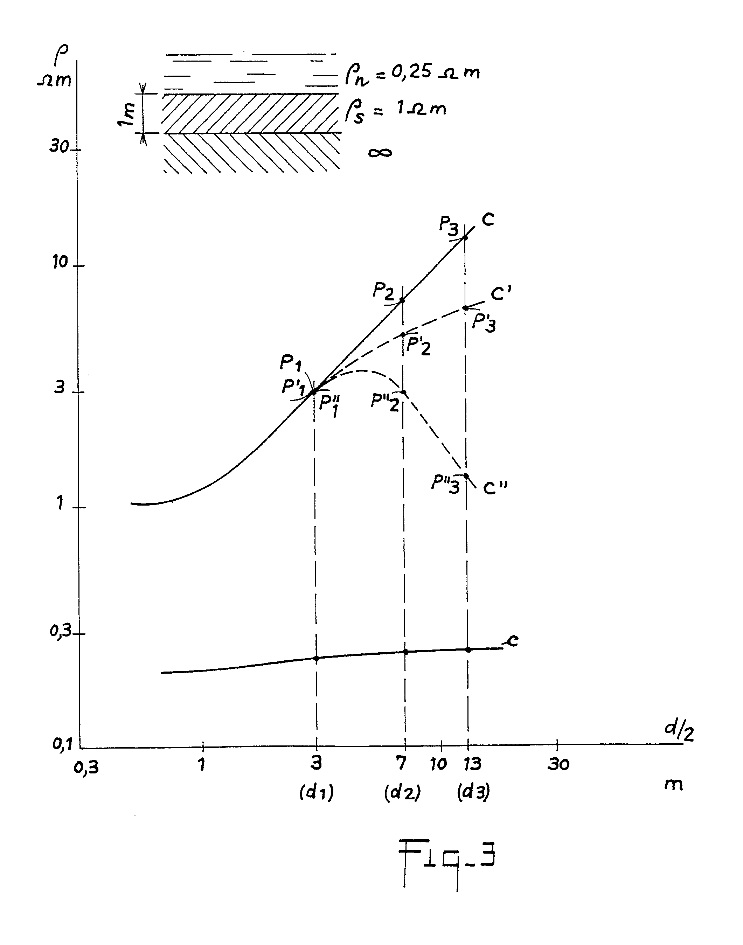

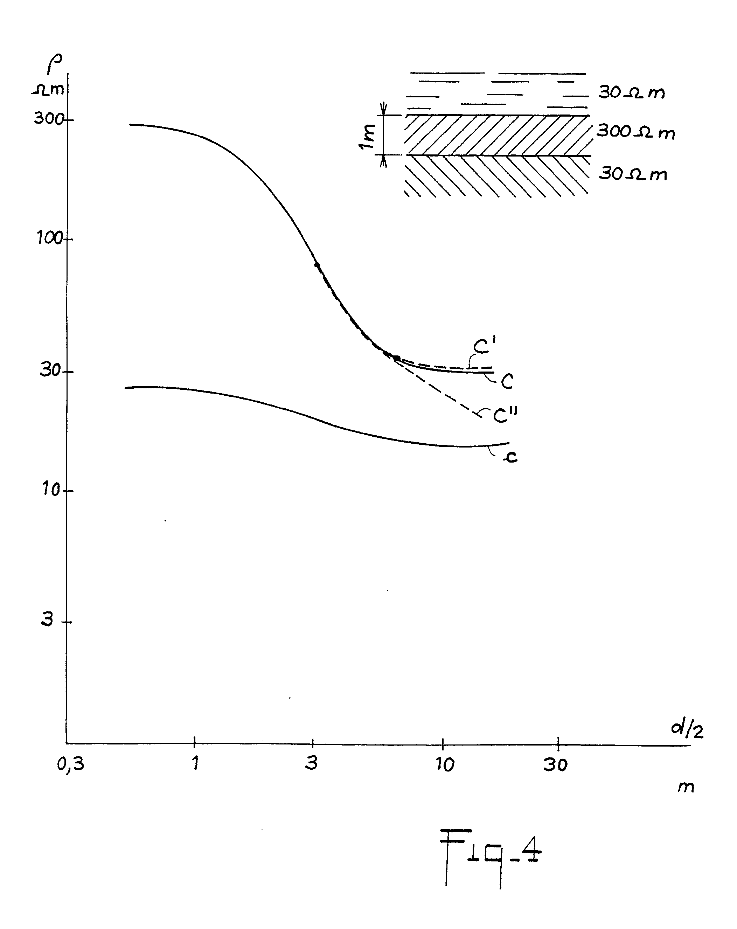

Les valeurs de résistivité apparente sont alors voisines de celle de la résistivité de l'eau recouvrant le sol, comme le montrent les courbes c des figures 3 et 4 tracées dans deux cas particuliers.

Afin de s'affranchir de cette difficulté, il est proposé d'utiliser, pour faire les mesures de résistivité apparente, un dispositif comportant un système d'électrodes AB, MN recouvert d'une feuille électriquement isolante, laquelle est destinée à empêcher les lignes de courant issues des électrodes d'injection AB de se refermer au sein de l'eau, ou tout au moins de ne s'y refermer que loin du système d'électrodes.

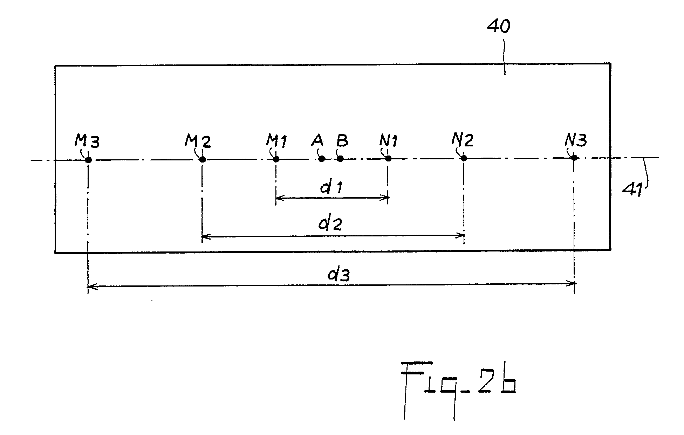

Les figures 2a et 2b représentent un tel dispositif, qui comprend une feuille isolante 40 de forme rectangulaire, qui peut par exemple être constituée par un tapis de caoutchouc. Sur la face inférieure de celle-ci sont fixées les paires d'électrodes précitées, alignées suivant l'axe longitudinal 41 de la feuille 40. Plus précisément, quatre paires d'électrodes sont prévues, savoir la paire AB, la paire MN d'écartement d variable se décomposant en trois paires $M_1N_1$, $M_2N_2$ et $M_3N_3$ d'écartements respectifs $d_1$, $d_2$ et $d_3$, que l'on sélectionne suivant l'écartement désiré par la deuxième paire MN. Toutes les paires d'électrodes ont leur centre de symétrie confondu avec le centre géométrique de la feuille 40.

A titre d'exemple, on peut choisir les valeurs dimensionnelles suivantes :
- écartement des électrodes :
AB = 1 m
$d_1$ = 6 m
$d_2$ = 14 m
$d_3$ = 26 m
- dimensions de la feuille 40 :
longueur = 30 m
largeur = 10 m.

Dans un dispositif ainsi dimensionné, la feuille 40 déborde longitudinalement de 2 m de part et d'autre de la paire d'électrodes $M_3N_3$ d'écartement maximal et, latéralement, de 5 m de chaque côté du système d'électrodes alignées.

Les résultats de mesure sont portés sur des diagrammes tels que ceux des figures 3 et 4 ou sont tracées, en coordonées logarithmiques, les courbes $C''$ représentatives des valeurs mesurées de résistivité apparente $\rho_a$ en fonction du demi-écartement $d/2$ des électrodes de la deuxième paire MN.

Le diagramme de la figure 3 est relatif à la reconnaissance d'un fond sous-marin comprenant une couche de vase d'épaisseur égale à 1 m et de résistivité $\rho_s$ égale à $1\,\Omega$m, reposant sur un épais substratum de résistivité très élevée et recouvert d'eau de mer de résistivité $\rho_n$ égale à $0,25\,\Omega$m. La courbe $C''$ indique les valeurs de résistivité apparente mesurées à l'aide du dispositif de sondage électrique représenté aux figures 2a et 2b et de mêmes dimensions, posé au fond de l'eau; cette courbe passe par les trois points $P''_1$, $P''_2$ et $P''_3$ correspondant respectivement aux trois écartements $d_1$, $d_2$ et $d_3$ de la paire d'électrodes MN.

On constate d'abord que la $C''$ est située très au-dessus de la courbe c obtenue à l'aide du même dispositif, dépourvu toutefois de feuille isolante, ce qui traduit l'efficacité de cette dernière. On constate ensuite, après avoir tracé la courbe C que l'on trouverait en l'absence d'eau, que si la courbe expérimentale $C''$ coïncide avec la courbe théorique C pour les petites valeurs de l'écartement d de la deuxième paire d'électrodes MN (inférieures à 6 m), elle s'en écarte passablement lorsque cet écartement croît (points $P''_2$ et $P''_3$ correspondant aux écartements $d_2$ = 14 m et $d_3$

= 26 m).

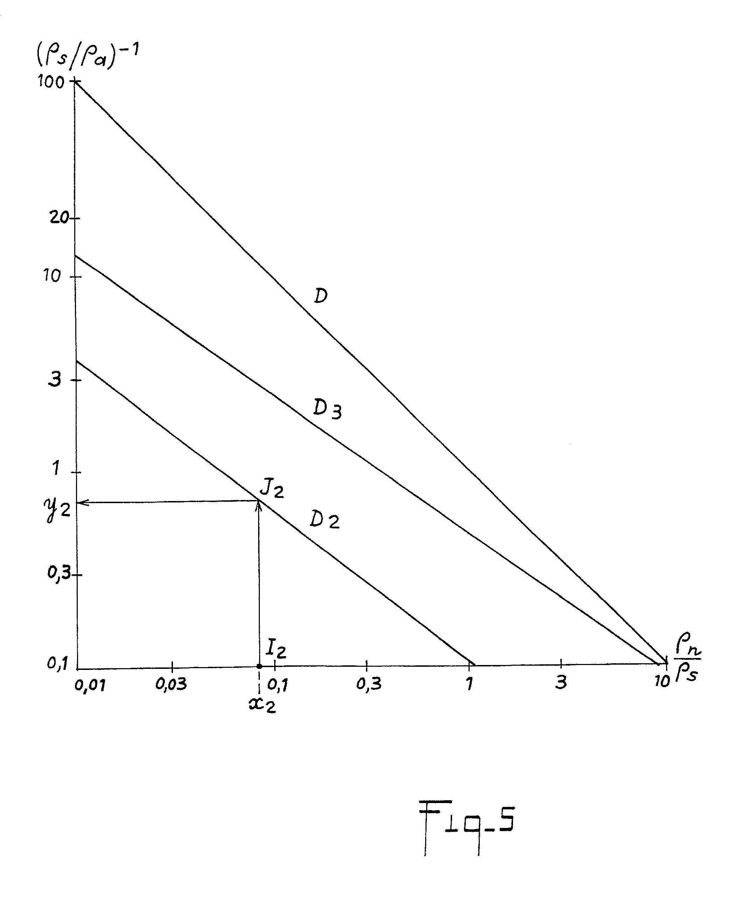

Il est possible d'améliorer les résultats de mesure pour les plus grandes valeurs de l'écartement d à l'aide de l'abaque donné en figure 5. Sur cet abaque sont tracées, en coordonnées logarithmiques, les courbes (sensiblement rectilignes) représentative de la quantité $(\rho_s/\rho_a) - 1$ en fonction de la quantité $\rho_n/\rho_s$ pour deux milieux 10 et 20 semi-infinis de résistivités $\rho_n$ et $\rho_s$ de valeurs diverses, savoir, outre une courbe D correspondant à des mesures de résistivité apparente $\rho_a$ faite sans feuille isolante 40, des courbes $D_2$ et $D_3$ correspondant à des mesures effectuées à l'interface des milieux 10 et 20 au moyen du dispositif des figures 2a et 2b, respectivement avec l'écartement $d_2 = 14$ m et $d_3 = 26$ m. On remarquera que la courbe $D_2$ se situe au-dessous de la courbe $D_3$, ce qui traduit le fait que plus la longueur effective du système d'électrodes est faible par rapport à la longueur de la feuille isolante 40, plus celle-ci est efficace pour protéger de l'influence de l'eau ledit système.

L'usage de l'abaque de la figure 5 va maintenant être expliqué en prenant pour exemple la correction du point $P''_2$ dont l'ordonnée représente la résistivité apparente mesurée pour l'écartement $d_2$ (14m) des électrodes MN, qui sera désignée par $\rho_{am2}$. On calcule d'abord la quantité $x_2 = \rho_n/\rho_{ae2}$, $\rho_{ae2}$ étant une valeur estimée de la résistivité apparente réelle pour l'écartement $d_2$ et $\rho_n$ étant la résistivité de l'eau, laquelle est mesurée in situ. On prend pour valeur estimée $\rho_{ae2}$ la valeur corrigée $\rho_{ac1}$ de la résistivité apparente obtenue pour l'écartement $d_1$ immédiatement inférieur. Dans le cas présent, il se trouve que la correction est nulle pour cet écartement, de sorte que $\rho_{ac1} = \rho_{am1} = 2,9\Omega$m. On a donc :

$x_2 = 0,25/2,9 = 0,086$.

A cette valeur corespond sur l'abaque le point $I_2$, dont l'abscisse correspond sur la courbe $D_2$ au point $J_2$ d'ordonnée $y_2 = 0,72$. On calcule enfin la quantité $\rho_{ac2}$, valeur corrigée de la valeur mesurée $\rho_{am2}$ de la résistivité apparente, par la formule :

$\rho_{ac2} = \rho_{am2} (1 + y_2)$

$= 2,92 (1 + 0,72) = 5\Omega$m.

C'est la valeur de l'ordonnée du point corrigé $P'_2$ déduit du point mesuré $P''_2$.

Procédant de la même manière pour chaque point de la courbe $C''$, on obtient une courbe corrigée $C'$ qui est beaucoup plus proche de la courbe théorique C que la courbe mesurée $C''$.

La figure 4 fournit un autre exemple, relatif à la reconnaissance d'un fond de rivière comprenant une couche de sable d'épaisseur égale à 1 m et de résistivité $\rho_s$ égale à $300\Omega$m, reposant sur un épais substratum de marne (résistivité égale à $30\Omega$m), l'eau douce qui la recouvre ayant une résistivité de $30\Omega$m également. Sur cette figure ont été tracées, outre la courbe c obtenue sans feuille isolante, les courbes théorique C, mesurée $C''$ et corrigée $C'$. On constate dans ce cas que la correction, beaucoup moins forte que dans le cas de la figure 3, conduit à une courbe $C'$ pratiquement confondue avec la courbe théorique C.

## Revendications

1. Procédé de reconnaissance par prospection électrique d'un sol recouvert d'une masse d'eau, selon lequel on réalise des mesures de résistivité apparente du milieu à l'aide d'un système d'électrodes que l'on dispose sur le sol au fond de l'eau, par injection d'un courant électrique déterminé dans l'une au moins des électrodes, lequel fait apparaître un potentiel dans au moins une autre électrode que l'on mesure et d'où l'on déduit une valeur de résistivité apparente du milieu soumis à la prospection électrique,
caractérisé par le fait que, lors des mesures à l'aide du système d'électrodes, entre celui-ci et la masse d'eau est interposée une feuille électriquement isolante continue, dimensionnée de façon à recouvrir largement l'ensemble des électrodes d'injection de courant et de mesure de potentiel.

2. Procédé selon la revendication 1, dans lequel le système d'électrodes est formé de paires d'électrodes, alignées ou non, d'écartements differents, tandis qu'on injecte un courant électrique déterminé dans l'une des paires d'électrodes et on mesure la différence de potentiel qui apparaît sur une autre paire d'électrodes pour en déduire une valeur de la résistivité apparente du milieu,
caractérisé par le fait que le système d'électrodes est recouvert en totalité par la feuille électriquement isolante.

3. Procédé selon la revendication 2, caractérisé par le fait que l'on corrige les valeurs de résistivité apparente $_a$ obtenues de la façon suivante :

   a) on dresse au préalable, expérimentalement, un abaque comportant des courbes représentatives de la quantité

   $y = (\rho_s / \rho_a) - 1$

   en fonction de la quantité

   $x = \rho_n/\rho_s$,

   $\rho_n$ étant la résistivité que peut présenter une masse d'eau et $\rho_s$ celle que peut présenter un sol, chaque courbe correspondant à un écartement prédéterminé $d_i$ de la paire d'électrodes de plus grand écartement;

   b) sur le terrain, on mesure la résistivité $\rho_n$ de la masse d'eau recouvrant le sol à reconnaître, ainsi que la résistivité apparente du fond par une série de valeurs, $d_1, d_2, ... d_i, ...$ de l'écartement de la paire d'électrodes de plus grand écartement, et l'on note les valeurs correspondantes $\rho_{ami}$ de la résistivité apparente mesurée;

c) pour chaque écartement $d_i$, on calcule la quantité

$x_i = \rho_n/\rho_{aei}$ ,

$\rho_{aei}$ étant une valeur estimée de la résistivité apparente plus proche de la vraie valeur que la valeur mesurée, on porte sur l'abaque en abscisses la quantité $x_i$ calculée et on relève l'ordonnée $y_i$ du point correspondant à cette abscisse sur la courbe relative à l'écartement choisi $d_i$, puis on calcule la valeur corrigée $\rho_{aci}$ de la résistivité apparente par la formule

$\rho_{aci} = \rho_{ami} (1 + y_i)$.

4. Procédé selon la revendication 3, caractérisé par le fait que la valeur estimée $\rho_{aei}$ est choisi égale à la valeur corrigée de la résistivité apparente $\rho_{ac\ (i-1)}$ précédemment déterminée pour l'écartement $d_{i-1}$ immédiatement inférieur de la paire d'électrodes de plus grand écartement.

5. Dispositif de reconnaissance par sondage électrique d'un sol submergé, comprenant un système d'électrodes alignées composé de deux paires d'électrodes, l'une d'écartement plus grand et variable, encadrant l'autre, et destiné à être appliqué sur le sol à reconnaître, l'une des paires d'électrodes servant à injecter un courant électrique dans le sol et l'autre à mesurer la différence de potentiel résultante qui apparaît entre ses deux points de contact avec le sol,

caractérisé par le fait qu'il est muni d'une feuille continue (40) de matériau électriquement isolant qui s'étend à plat sur le système d'électrodes entier ($AB$, $M_1$,$N_1$, $M_2$,$N_2$, ...) et le recouvre en débordant largement de toutes parts autour de celui-ci lorsqu'il est appliqué sur la surface du sol submergé à reconnaître.

6. Dispositif selon la revendication 5, caractérisé par le fait que la feuille isolante (40) déborde de deux mètres au moins tout autour du système d'électrodes.

7. Dispositif selon la revendication 6, caractérisé par le fait que, pour un système d'électrodes de longueur maximale égale à 26 mètres environ, la feuille isolante (40) présente la forme d'un rectangle de 10 m x 30 m environ.

8. Dispositif selon l'une quelconque des revendications 5 à 7, caractérisé par le fait que les électrodes sont montées le long d'un support linéaire auquel est fixée la feuille isolante (40).

9. Dispositif selon l'une quelconque des revendications 5 à 7, caractérisé par le fait que les électrodes sont fixées directement sur la feuille isolante (40), qui leur sert de support.

Fig. 1

Fig. 2a

Fig_2b

Fig_3

Fig.4

Fig. 5

Office européen
des brevets

Numéro de la demande

**RAPPORT DE RECHERCHE
EUROPEENNE**

**EP 90 40 2256**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 583 175  (CENTRE NATIONAL DES RECHERCHES SCIENTIFIQUE)<br>* revendication 1; figure 1 *<br>– – – | 1 | G 01 V 3/02 |
| A | EP-A-0 005 872  (SHELL INTERNATIONALE RESEARCH MAATSCHAPPIJ)<br>* page 2, lignes 7 - 22 *<br>– – – – – | 1 | |

| DOMAINES TECHNIQUES RECHERCHES (Int. Cl.5) |
|---|
| G 01 V |

Le présent rapport de recherche a été établi pour toutes les revendications

| Lieu de la recherche | Date d'achèvement de la recherche | Examinateur |
|---|---|---|
| La Haye | 16 novembre 90 | SWARTJES H.M. |

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons
------------------------------------------------------------
& : membre de la même famille, document correspondant